# FASCICULE DE BREVET EUROPEEN

(11) **EP 1 733 539 B1**
(45) Date de publication et mention de la délivrance du brevet: **15.05.2019**
(21) Numéro de dépôt: 05744539.7
(22) Date de dépôt: 24.03.2005
(51) Int. Cl.: H04L 29/06

(54) **DISPOSITIF ET PROCÉDÉ DE DÉTECTION ET DE PRÉVENTION D'INTRUSIONS DANS UN RÉSEAU INFORMATIQUE**
VORRICHTUNG UND VERFAHREN ZUM ERFASSEN UND VERHINDERN DES EINDRINGENS IN EIN COMPUTERNETZ
DEVICE AND METHOD FOR DETECTING AND PREVENTING INTRUSION INTO A COMPUTER NETWORK

(30) Priorité: 25.03.2004 FR 0403114
(43) Date de publication de la demande: 20.12.2006
(73) Titulaire: Netasq, 59650 Villeneuve d'Ascq (FR)
(72) Inventeur: THOMAS, Fabien, F-59650 Villeneuve d'Ascq (FR); LOTIGIER, Georges, F-59510 Hem (FR)
(74) Mandataire: Delumeau, François Guy
(86) Numéro de dépôt international: PCT/FR2005/000711
(87) Numéro de publication internationale: WO 2005/094035

(56) Documents cités:
- WO-A-00/78004
- US-B1- 6 219 706
- ANONYMOUS: "NETASQ IPS-FIrewalls. ASQ Real-Time Intrusion Prevention" NETASQ, [Online] 2003, XP002303950 Extrait de l'Internet: URL:http://web.archive.org/web/20031121140 506/www.netasq.com/en/products/pdf/wp_asq_ light102203en.pdf> [extrait le 2004-11-04]

## Description

La présente invention a pour objet un dispositif et un procédé de détection et de prévention d'intrusion dans un réseau informatique permettant de prévenir les intrusions en les détectant et en les bloquant avant pénétration du réseau.

Dans un réseau informatique, la disponibilité des données et leur transmission dans un contexte de sécurité maximum est un problème constant. La complexité grandissante des attaques nécessite une protection de plus en plus sophistiquée et intelligente du réseau. Il faut en effet pouvoir vérifier le format et la destination des paquets qui transitent, vérifier leur contenu, mémoriser l'historique des sessions pour en faire l'analyse sur une certaine durée, distinguer entre les vrais et les fausses alarmes remontées, et surtout réagir à l'attaque avant que celle-ci n'ait trop pénétré au coeur du réseau.

Parmi les solutions que l'on retrouve dans l'état de la technique, on connaît celles qui se basent sur le filtrage de paquets mais qui procurent un faible niveau de sécurité car seuls les en-têtes de paquets sont vérifiés. Le filtrage par proxy est une autre solution dans laquelle des filtres de contenu sont utilisés par exemple pour bloquer l'accès à des sites web et filtrer les messages électroniques et les pièces jointes. Ces solutions ne sont pas conçues pour bloquer les attaques et causent de très grosses pertes de performance. En outre, elles ne respectent pas l'architecture du modèle client serveur et nécessitent un proxy par port de communication. On connaît également une méthode d'inspection de l'état des connexions dans le but de permettre ou de refuser le trafic et d'obtenir de plus grandes performances, basée sur une table d'état, mais qui là encore ignore les attaques. C'est le principe du pare-feu réseau, avec une variante correspondant au pare-feu applicatif dans lequel on ne se contente pas de vérifier l'état des connexions mais également le contenu.

D'autres systèmes complexes existent tel que les systèmes de détection d'intrusion ou IDS (pour Intrusion Détection System), qui s'appuient sur une base de données de signatures d'attaques connues. Cette base doit être mise à jour régulièrement. Ces systèmes présentent un inconvénient majeur qui est qu'ils ne bloquent pas l'attaque mais la détectent une fois qu'elle est passée. Il est donc bien souvent trop tard pour réagir pour des réseaux vulnérables qui peuvent être compromis en quelque secondes.

On connaît aussi des systèmes de prévention d'intrusion ou IPS (pour Intrusion Prévention System), qui sont en quelque sorte des IDS placés en coupure de réseau et permettant de détecter et de bloquer les attaques. Ces systèmes utilisent des procédés de détection plus élaborés, qui combinent généralement une approche par scénario et une approche comportementale dans le but de limiter les fausses alarmes (générées en abondance par les IDS) et de détecter et bloquer les attaques, même nouvelles. En réaction à une telle attaque, ces systèmes reconfigurent le pare-feu réseau en conséquence. Cependant, un des inconvénients de ces systèmes est qu'ils ne peuvent détecter les attaques réparties sur plusieurs segments du réseau puisqu'ils opèrent sur une seule branche. Pour pouvoir protéger plusieurs branches, il faut plusieurs de ces systèmes, ce qui complique considérablement leur gestion. Cette complexité est une source de faille de sécurité supplémentaire, à côté du coût élevé (achat, l'installation et maintenance).

Par ailleurs, quels que soient les systèmes de l'état de la technique couramment utilisés, les politiques de filtrage consistent essentiellement dans le blocage ou l'autorisation de certains numéros de port. Or, de plus en plus d'applications communiquent sur des ports dynamiques ou variables, et certains applicatifs arrivent même sur le marché avec comme objectif de contourner le pare-feu. La conséquence est que si l'on ne peut garantir qu'une application donnée utilise un port donné, on ne peut pas appliquer un filtrage figé basé sur une association figée application-port de communication. En outre, le fait que les applications utilisent généralement le canal préalablement ouvert pour communiquer avec d'autres protocoles, et qu'il est nécessaire de connaître avec précision le fonctionnement d'un protocole pour trouver le port de communication à ouvrir ou à fermer, rend la notion d'autorisation de port pour une application peu fiable.

On connait également le document de la Demanderesse : « Netasq IPS-Firewalls, ASQ Real Time Intrusion Profession » publié en 2003. Ce document divulgue un pare-feu comportant un système de détection et prévention d'intrusions. Ledit pare-feu comporte des modules autonomes d'analyse d'un protocole donné et un module générique qui s'attache aux connexions pour lesquels le protocole n'a pas été reconnu. Ces modules sont capables de reconnaître un protocole indépendamment du port de communication utilisé. La demande WO 00/78004 A1 divulgue un pare-feu capable de reconnaître un protocole utilisé dans une communication et d'appliquer des politiques de filtrage définies pour le protocole.

Il existe donc un besoin d'une solution fiable qui permette de pallier les inconvénients précités, notamment concernant la protection d'un réseau comprenant de nombreux segments, et dans un contexte où les attaques utilisent des ports de communication variables.

C'est donc l'objet de l'invention que de pallier ces inconvénients. A cette fin, l'invention se rapporte selon un premier aspect à un procédé de détection et de prévention d'intrusion dans un réseau informatique, tel que défini par la revendication 1.

L'invention se rapporte selon un deuxième aspect à un dispositif de détection et de prévention d'intrusion dans un réseau informatique, tel que défini par la revendication 4, intégré dans un pare-feu situé sur le réseau, permettant ainsi de bloquer les attaques avant pénétration sur ledit réseau avec une réaction instantanée (pas de délai entre émission d'une alerte et mise en pratique des ordres de réinitialisation). Un tel dispositif intégré au pare-feu protège l'ensemble des segments du réseau, sans qu'il soit nécessaire d'installer des dispositifs spécifiques sur chacun des segments.

Selon l'invention, le filtrage sélectif des connexions, après que ledit protocole accédant a été automatiquement reconnu, consiste à vérifier en permanence la conformité des communications circulant sur une connexion donnée au dit protocole, pour délivrer une autorisation dynamique pour les communications résultant du fonctionnement normal du protocole et délivrer un refus dynamique pour les communications résultant d'un fonctionnement anormal du protocole. Plus précisément, tant que le protocole accédant d'une connexion n'est pas reconnu, les données sont acceptées mais non transmises. Si le nombre de paquets de données acceptées mais non transmises dépasse un certain seuil, ou si les données sont acceptées mais non transmises depuis un certain temps dépassant un certain seuil, alors la connexion est non autorisée.

Le dispositif comprend un moyen de prévention des intrusions par analyse des communications, intégré dans le pare-feu réseau, sur le point central et avant chaque branche du dit réseau, ledit moyen de prévention des intrusions comprenant un moyen de filtrage sélectif des communications par reconnaissance automatique du protocole accédant, indépendamment du port de communication utilisé par le protocole. Le moyen de filtrage sélectif comprend au moins un module autonome d'analyse d'au moins un protocole de communication donné. Au moins un des modules autonomes comprend plus précisément une unité de reconnaissance automatique d'un protocole de communication donné, et une unité de vérification de la conformité des communications circulant sur une connexion donnée au dit protocole, et est conçu pour délivrer une autorisation dynamique pour les communications résultant du fonctionnement normal du protocole et délivrer un refus dynamique pour les communications résultant d'un fonctionnement anormal du protocole.

Un tel dispositif et un tel procédé permettent avantageusement de bloquer les attaques connues comme les attaques inconnues. Une interface permet à l'utilisateur de renseigner les critères définissant la politique de filtrage, en les spécifiant en langage naturel. En outre, le dispositif comporte un moyen de traitement statistique des informations de connexion, et un moyen de stockage de ces informations et des informations traitées (journaux d'audit), dans le but de simplifier la gestion ultérieure de ces informations.

D'autres caractéristiques et avantages de l'invention apparaîtront plus clairement et de manière complète à la lecture de la description ci-après des variantes préférées de mise en oeuvre du procédé et de réalisation du dispositif, lesquelles sont données à titre d'exemples non limitatifs et en référence aux dessins annexés suivants :
- figure 1 : représente schématiquement un réseau de type classique interconnecté à Internet,
- figure 2 : représente les détails fonctionnels d'un pare-feu intégrant le dispositif selon l'invention,
- figure 3 : représente schématiquement les détails fonctionnels d'un analyseur de protocole du dispositif selon l'invention,
- figure 4 : représente schématiquement un module autonome d'analyse de protocole de communication du dispositif selon l'invention,
- figure 5 : représente schématiquement le procédé de détection et prévention d'intrusions selon l'invention

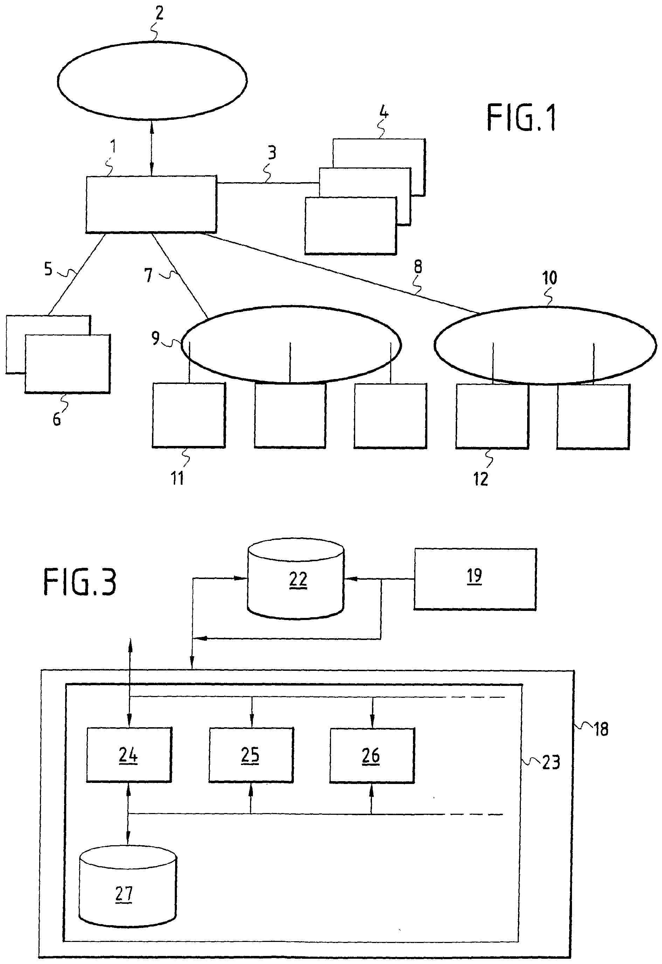

La figure 1 représente schématiquement un réseau de type classique interconnecté à Internet, tel qu'on le connaît dans l'état de la technique. Dans cette configuration, on retrouve schématiquement trois zones au centre desquelles se trouve le pare-feu 1.

La première zone est une zone externe comme l'Internet par exemple, référencée 2 sur la figure 1.

La seconde zone, référencée 3, communément appelée DMZ pour DeMilitarised Zone, est dotée d'une sécurisation intermédiaire entre l'extérieur et l'intérieur. Dans cette zone, on peut trouver un ou plusieurs serveurs 4.

La troisième zone est la zone interne à proprement parler, qui peut être divisée en plusieurs segments. Le premier segment 5 correspond à la partie câblée du réseau interne et comprend éventuellement un ou plusieurs serveurs 6. Les segments 7 et 8 correspondent respectivement à deux zones locales 9 et 10, chacune pouvant comprendre un ou plusieurs postes de travail respectivement référencés 11 et 12.

Le dispositif et le procédé de l'invention tirent partie de la position centrale du pare-feu dans ce type de configuration.

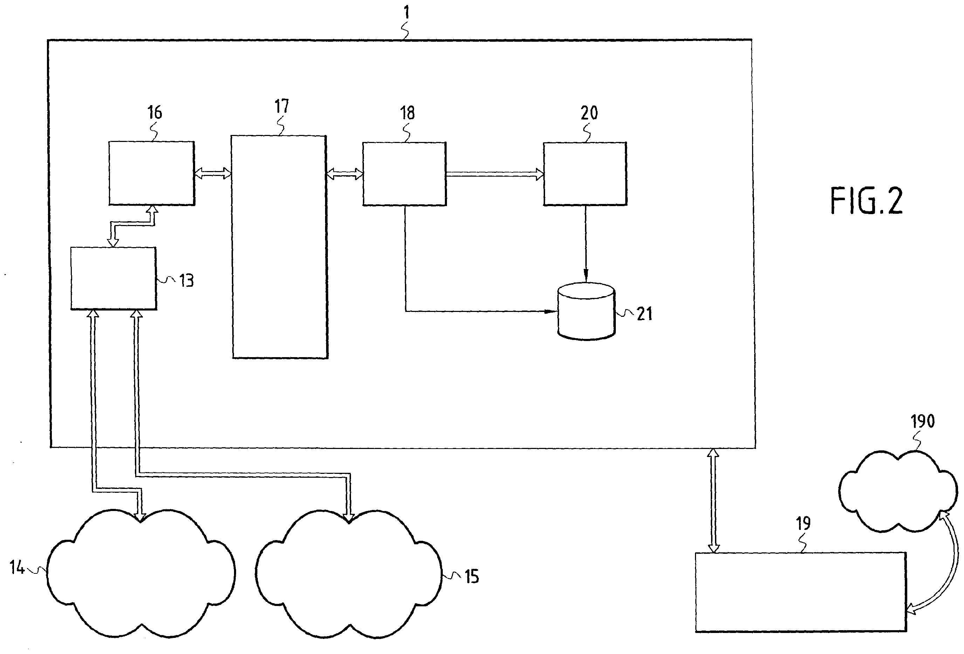

La figure 2 représente les détails fonctionnels d'un pare-feu intégrant le dispositif selon l'invention. Ainsi, à l'intérieur du pare-feu 1, on retrouve les interfaces réseau 13 par lesquelles arrivent et repartent les données de communication, d'une part en provenance des ou vers les utilisateurs internes (à l'intérieur d'une entreprise par exemple) et les utilisateurs externes (à l'extérieur de l'entreprise par exemple), et repérés par la référence 14, et d'autre part en provenance des et vers les ressources telles que les systèmes d'information, les serveurs d'entreprise, et d'une façon générale toute infrastructure client des serveurs d'entreprise, repérés par la référence 15.

Par le terme utilisateur, externe ou interne, on entend non seulement les personnes physiques, mais également les applications par exemple, et, d'une façon générale, les emetteurs et/ou récepteurs d'information qui communiquent sur le réseau.

En amont des interfaces réseau 13, et, éventuellement, mais pas nécessairement, à l'intérieur du pare-feu 1, les communications transitent par un module 16 de type NAT (Network Address Translation) qui met en oeuvre notamment la traduction d'adresses pour le routage, puis par un module 17 de type VPN (Virtual Private Network) qui met en oeuvre notamment un chiffrage et déchiffrage des données.

Les données transitent enfin par le module 18 de détection et de prévention d'intrusion dans le réseau. Ce module 18 met en oeuvre le procédé de l'invention qui sera expliqué en détail plus loin. Il met en oeuvre la politique de filtrage spécifiée par l'utilisateur (ou administrateur) 190, par le biais d'une interface d'administration 19 permettant d'entrer les critères définissant cette politique de filtrage en langage naturel. La saisie de ces critères pourra ainsi se faire par exemple en spécifiant le nom d'un protocole, plutôt que les ports probables utilisés par ce protocole. C'est bien cette politique de filtrage qui sert de base à l'analyse protocolaire mise en oeuvre dans le procédé de l'invention.

Par ailleurs, le module de détection et de prévention d'intrusion dans le réseau génère des alarmes traitées par le module 20. Enfin, les informations de connexion qui transitent dans ce pare-feu, sont transmises par le module 18 à un moyen 21 de type « journal d'audit », c'est-à-dire de stockage de l'historique des connexions, après un éventuel traitement.

La figure 3 représente schématiquement les détails fonctionnels d'un analyseur de protocole du dispositif selon l'invention, intégré dans le module 18 de la figure 2. Sur cette figure 3, on retrouve donc un module d'analyse 23 qui comprend un ou plusieurs modules 24, 25, 26 d'analyse spécifique d'un protocole donné. Chacun de ces modules est relié à un moyen de stockage 27 dans lequel se trouvent stockées les données qui vont permettre de vérifier la conformité à chacun des protocoles. Bien évidemment, le choix d'un unique moyen de stockage 27 pour l'ensemble des données de tous les protocoles traités, n'est pas limitatif de l'invention. On peut en effet envisager de stocker séparément les données respectives de chaque protocole. Ce module 23 d'analyse reçoit en entrée les critères de filtrage qui sont spécifiés par l'utilisateur via l'interface d'administration 19, et qui sont éventuellement stockés dans un moyen de stockage 22. Ces critères définissent notamment les modules effectivement activés, et ceux qui sont désactivés. Chacun des modules activés 24, 25, 26 reçoit en entrée les données de connexion à analyser et, dans un premier temps, détermine si ces données suivent le protocole pour lequel il a été prédéfini. Si aucun module 24, 25, 26 ne reconnaît le protocole, alors la connexion est considérée comme non analysée.

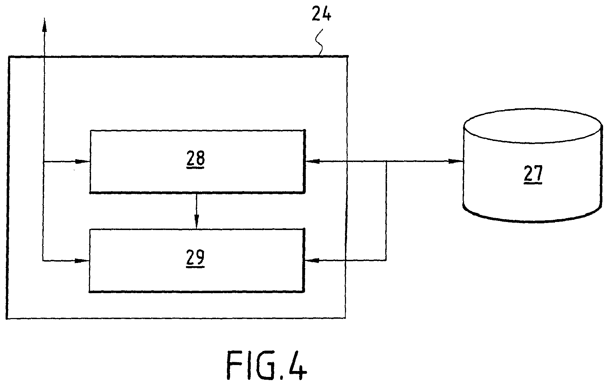

La figure 4 représente schématiquement un module autonome d'analyse de protocole de communication du dispositif selon l'invention. Ce module 24 comprend un sous-module 28 de reconnaissance automatique du protocole, et un sous-module 29 de vérification de conformité au protocole. Chacun des modules 24, 25, 26 de la figure 3 est, dans sa structure et dans sa fonction, identique. Chacun de ces modules est autonome en ce qu'il peut être ajouté à ou retiré de l'ensemble sans bouleversement, en fonction des besoins (module de type « plugins »).

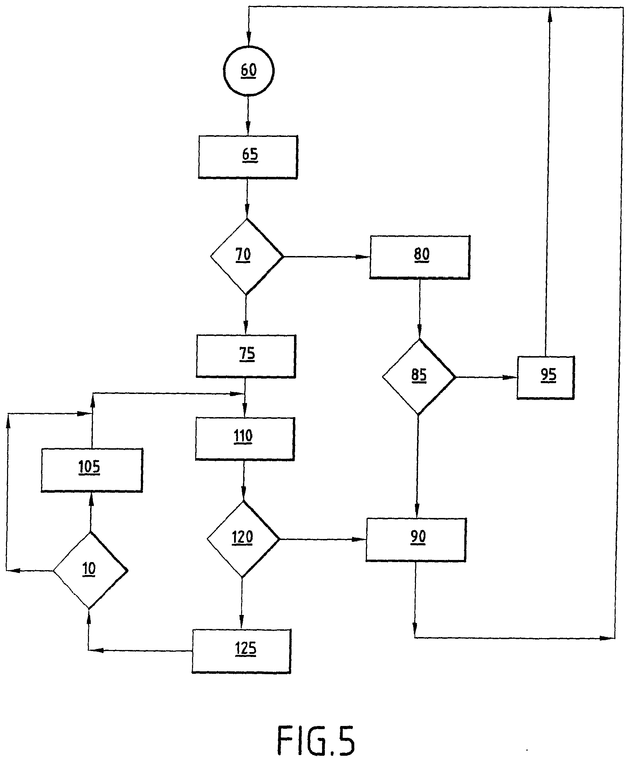

Le dispositif de l'invention, décrit dans les figures 1 à 4, met en oeuvre le procédé de l'invention qui va maintenant être expliqué plus en détail, dans une variante de mise en oeuvre, et en référence à la figure 5.

Si la couverture des protocoles est complète (dans l'idéal, un module autonome d'analyse par protocole possible), lorsqu'une nouvelle connexion se présente elle est automatiquement rattachée à un module d'analyse. On peut également utiliser, en plus des modules spécifiques chacun dédié à un protocole donné, un module de type générique. Ce module permet de suivre le trafic pour lequel aucun des autres modules ne reconnaît le protocole. Ceci est particulièrement utile dans le cas notamment des attaques du type « data evasion ».

Tant que l'identification du protocole n'est pas réalisée, les données sont acceptées mais non transmises. A chaque fois qu'une nouvelle information arrive (référence 60), les fonctions de détection des différents modules autonomes sont exécutées en séquence (référence 65), module après module. Lors de chaque exécution, la fonction de détection retourne son avis sur le paquet de données (référence 70). Cet avis peut être de trois types :
a) protocole détecté ; le module a donc reconnu automatiquement le protocole et sera chargé de l'analyser,
b) protocole non détecté, module générique présent et activé ; le module générique sera chargé de l'analyse
c) protocole non détecté, module générique absent ou présent mais non activé
d) information insuffisante dans le paquet de données pour détecter.

Lorsque la fonction de détection répond par a) ou b),le module spécifique ou le module générique d'analyse s'attache à la connexion (référence 75).

En particulier, dans le cas b) où le module générique mentionné plus haut est présent et activé, une connexion basée sur un protocole qui n'est reconnu par aucun des autres modules spécifiques est automatiquement attachée à ce module générique (à l'étape référencée 75).

Dans le cas c), si ce module générique n'est pas présent, ou est présent mais non activé, les données sont acceptées mais non transmises (référence 80). Si tous les modules répondent par c) ou d), alors la connexion est considérée comme non analysée, elle n'est donc pas autorisée

Par ailleurs, au-delà d'un certain seuil de paquets de données non identifiés, et/ou au-delà d'un certain temps de tentatives d'identifications sans succès, ce qui est déterminé à l'étape référencée 85, l'évaluation se termine et un refus dynamique est généré (référence 90). Si le ou les seuils ne sont pas dépassés, l'évaluation se termine et la et la connexion est considérée comme non analysée (référence 95). Ces seuils de nombre de paquet de données et/ou de temps peuvent être prédéfinis et fixés dans le dispositif, ou paramétrables par exemple par l'intermédiaire de l'interface 19 d'administration du dispositif. Ils peuvent être éventuellement calculés de façon dynamique.

Lorsque un module spécifique est attaché à la connexion (à l'étape référencée 75), celui-ci va vérifier que les informations qui circulent sur ladite connexion correspondent bien au protocole détecté (référence 110). Il s'agit donc d'une vérification de la conformité des données du protocole et une vérification de l'utilisation qui est faite de ce protocole, ces vérifications portant sur la grammaire et la syntaxe Ces vérifications peuvent s'appuyer sur les standards qui définissent ces protocoles et leurs usages tels que les RFC (Request for Comments) bien connus de l'homme du métier.

Lorsque le module générique est attaché à la connexion (à l'étape référencée 75), ce dernier ne vérifie pas que les informations circulant sur ladite connexion correspondent bien au protocole détecté. En effet, par définition, le rattachement au module générique signifie qu'aucun protocole n'a été reconnu par les autres modules. Dans ce cas, le module générique vérifie la cohérence des paquets. Cette vérification de cohérence peut porter par exemple sur le séquencement et les retransmissions. Dans ces cas, on vérifie notamment que deux paquets de données successivement analysés sont strictement identiques ou non (référence 110). La stricte identité permet de vérifier qu'un paquet, sensé être une retransmission, est bien la retransmission du précédent (attaque par « data évasion »). Si la retransmission attendue n'en est pas une, le paquet est bloqué et la connexion est refusée ou terminée.

On voit donc que si la vérification de conformité à un protocole donné préalablement reconnu ou la vérification générique (référence 110), renvoient une réponse négative, ce qui est déterminé à l'étape référencée 120, l'évaluation se termine et un refus dynamique est généré (référence 90). Sinon, une autorisation dynamique est délivrée (référence 125), et la boucle d'analyse multicouche se poursuit.

Si un module spécifique, et non le module générique, est attaché, ce qui est déterminé à l'étape 100, le module associé au protocole immédiatement hiérarchiquement supérieur au module précédemment attaché, est automatiquement attaché (à l'étape référencée 105) pour vérification ultérieure de conformité (à l'étape référence 110). Sinon, le module générique reste attaché et la boucle se poursuit par une vérification générique à l'étape référencée 110.

Chaque communication circulant sur une connexion est donc soit dynamiquement autorisée, soit dynamiquement refusée, selon que le module de vérification protocolaire attaché à la connexion détermine que la communication résulte du fonctionnement normal ou anormal du protocole.

Ainsi chaque module reçoit systématiquement la nouvelle connexion en entrée pour une détection de protocole dans un premier temps. Par conséquent, cette détection qui, si elle est réussie, sera suivie d'une analyse du protocole, ne dépend pas du port de communication utilisé par ledit protocole, comme c'est généralement le cas dans l'état de la technique. De cette façon, on s'affranchit des problèmes liés à l'utilisation de ports dynamiques par certaines applications.

Par ailleurs, la vérification du protocole, une fois reconnu, permet de s'affranchir des problèmes liés aux applications qui utilisent un canal ouvert pour communiquer avec d'autres protocoles. En effet, dans ce dernier cas, une alarme sera générée car le module sensé vérifier un protocole donné détectera, à un moment ou à un autre, dans un paquet de données des informations non conformes au protocole initial.

En outre, chaque module ainsi conçu permet de délivrer une autorisation dynamique des connexions résultant du fonctionnement normal du protocole. Il permet en effet d'obtenir les informations nécessaires à l'ouverture dynamique des connexions induites par le protocole, une connexion principale pouvant en effet induire une ou plusieurs connexions secondaires (ou induites). Dans ce cas, il est indispensable que toutes les connexions secondaires soient bien rattachées à l'autorisation de la connexion principale. Seul un module d'analyse en profondeur et avec précision du fonctionnement du protocole peut connaître précisément les ports de communication à ouvrir et à fermer.

L'analyse réseau mise en oeuvre par ces modules est une analyse multicouches : à chaque étape, le module courant analyse la partie du paquet de données correspondant au protocole pour lequel il est conçu, et transmet l'autre partie au module d'analyse du protocole supérieur dans la hiérarchie (par exemple : Ethernet, puis IP, puis TCP, puis HTTP).

Ainsi, l'analyse basée sur la vérification de la conformité du protocole et de son utilisation, définis par les standards tels que les RFC, permet entre autre de prévenir non seulement les attaques connues mais également les attaques inconnues. Tout trafic qui ne satisfait pas aux spécifications de ces standards sera bloqué en temps réel. En outre, les modules de reconnaissance automatique et d'analyse de protocole étant autonomes, ils peuvent être ajoutés ou retirés simplement, sans bouleverser le dispositif. Lorsqu'ils sont présents, ils peuvent aussi être activés ou désactivés simplement, en fonction de la politique de filtrage spécifiée par l'utilisateur. Ainsi, chaque nouvelle faille de sécurité pourra être comblée aisément. Ces agents intelligents que constituent les modules de reconnaissance automatique et d'analyse de protocole, analysent en permanence les flux de trafic et s'attachent dynamiquement lorsqu'ils reconnaissent le protocole, indépendamment du port de communication utilisé.

L'ensemble de la description ci-dessus est donné à titre d'exemple, et est non limitatif de l'invention. En particulier, le pare-feu décrit ci-dessus pourra intégrer un très grand nombre d'autres modules fonctionnels en sus de ceux mentionnés ici. On pensera notamment à l'utilisation de proxies, bien connus de l'homme du métier.

De même, le fait que la description ci-dessus présente 3 modules 24, 25, 26, de reconnaissance automatique et de vérification d'un protocole donné, n'est pas limitatif de l'invention. Le nombre total de tels modules dépend du nombre de protocoles gérés (HTTP, FTP, H323, DNS, RIP, ...). Par ailleurs, un module de type générique tel que décrit plus haut peut être adjoint ou non, en fonction des besoins. Egalement, comme décrit plus haut, chaque modules, spécifiques ou générique si ce dernier est présent, peut être simplement activé ou désactivé en fonction des besoins. Enfin, la vérification effectuée par le module générique, notamment concernant le séquencement et la retransmission corrects des paquets (en particulier vérification de la stricte identité de deux paquets de données successivement analysés), n'est qu'un exemple de vérification qui peut être effectuée par un tel module. Tout autre vérification non liée à la conformité à un protocole donné, entre dans la catégorie des vérifications génériques et pourra être intégrée dans ledit module générique.

## Revendications

1. Procédé de détection et de prévention d'intrusions dans un réseau informatique comportant un point central et une pluralité de branches, ce procédé étant mis en oeuvre par un pare feu (1) situé audit point central de sorte à protéger l'ensemble des branches dudit réseau, ce procédé comprenant une étape de détection des connexions au niveau du point central et avant chaque branche dudit réseau, une étape (65) de filtrage sélectif desdites connexions, ladite étape de filtrage sélectif comprenant d'une part une étape de reconnaissance automatique du protocole accédant, indépendamment du port de communication utilisé par ledit protocole, et d'autre part, après que ledit protocole accédant a été automatiquement reconnu, une étape (110) de vérification de la conformité de chaque communication circulant sur une connexion donnée audit protocole, pour délivrer (125) une autorisation dynamique pour les communications résultant du fonctionnement normal du protocole et délivrer (90) un refus dynamique pour les communications résultant d'un fonctionnement anormal du protocole,
procédé dans lequel :
- ladite vérification (110) de conformité se fait couche par couche, par analyse protocolaire successive de chaque partie du paquet de données circulant sur la connexion correspondant à un protocole donné, du protocole le plus bas au protocole le plus haut,
- chaque connexion principale autorisée pouvant induire une ou plusieurs connexions secondaires, ladite vérification de conformité détecte les informations nécessaires à l'ouverture desdites connexions secondaires et rattache lesdites connexions secondaires à l'autorisation de ladite connexion principale,
procédé dans lequel, tant que le protocole accédant d'une connexion n'est pas reconnu, les données sont acceptées mais non transmises, et dans lequel lorsque le protocole accédant d'une connexion n'est pas automatiquement reconnu, ladite étape de vérification de la conformité de chaque communication circulant sur une connexion donnée audit protocole est remplacée par une vérification générique de la cohérence des paquets de données, ladite vérification de cohérence portant notamment sur le séquencement et les retransmissions desdits paquets de données, une politique dudit filtrage spécifiée par l'utilisateur et comprenant au moins un nom dudit protocole étant reçue en langage naturel.

2. Procédé selon la revendication 1, **caractérisé en ce que**, si le nombre de paquets de données acceptées mais non transmises dépasse un certain seuil, ou si les données sont acceptées mais non transmises depuis un temps dépassant un certain seuil, alors la connexion est considérée comme non analysée.

3. Procédé selon l'une quelconque des revendications 1 et 2, **caractérisé en ce que**, si les données sont acceptées mais non transmises depuis un temps dépassant un certain seuil, alors la connexion est considérée comme non analysée.

4. Dispositif de détection et de prévention d'intrusions dans un réseau informatique comportant un point central et une pluralité de branches, ce dispositif comportant un pare feu (1), un moyen de prévention des intrusions par détection des connexions, directement intégré dans ledit pare feu sur le point central et avant chaque branche dudit réseau de sorte à protéger l'ensemble des branches du réseau, ledit moyen de prévention des intrusions (18) comprenant un moyen de filtrage sélectif desdites connexions par reconnaissance automatique du protocole accédant, indépendamment du port de communication utilisé par ledit protocole,
dispositif dans lequel :
- ledit moyen de filtrage sélectif (18) comprend au moins un module (24, 25, 26) autonome d'analyse d'au moins un protocole de communication donné,
- au moins un des modules autonomes comprend :
i. une unité (28) de reconnaissance automatique d'un protocole de communication donné,
ii. une unité (29) de vérification de la conformité des communications circulant sur une connexion donnée audit protocole,
iii. un moyen pour délivrer une autorisation dynamique pour les communications résultant du fonctionnement normal du protocole, et délivrer un refus dynamique pour les communications résultant d'un fonctionnement anormal du protocole,
iv. un moyen de transmission d'une partie d'un paquet de données à un module autonome d'analyse d'un protocole hiérarchiquement supérieur,.
ledit dispositif comprenant, en plus du ou des modules autonomes d'analyse d'un protocole de communication donné, un module autonome générique qui s'attache aux connexions pour lesquels le protocole n'a été reconnu par aucun des autres dits modules autonomes, ledit module autonome générique étant configuré pour vérifier la cohérence des paquets de données, ladite vérification de cohérence portant notamment sur le séquencement et les retransmissions desdits paquets de données, ledit dispositif étant **caractérisé en ce qu'**il comporte une interface de renseignement de critères définissant la politique de filtrage spécifiés par l'utilisateur en langage naturel, lesdits critères comprenant au moins un nom dudit protocole.

5. Dispositif selon la revendication 4, **caractérisé en ce que** ladite interface permet d'activer ou de désactiver chacun desdits modules autonomes

6. Dispositif selon l'une quelconque des revendications 4 à 5, **caractérisé en ce qu'**il comporte un moyen de traitement statistique des informations de connexion et un moyen de stockage desdites informations de connexion et informations traitées.

## Patentansprüche

1. Verfahren zur Detektion und Verhinderung eines Eindringens in ein Computernetzwerk, umfassend einen Mittelpunkt und mehrere Zweige, wobei dieses Verfahren durch eine Firewall (1) umgesetzt wird, die sich an dem Mittelpunkt befindet, um die Gesamtheit der Zweige des Netzwerks zu schützen, wobei dieses Verfahren einen Schritt zur Detektion von Verbindungen auf Ebene des Mittelpunkts und vor jedem Zweig des Netzwerks einen Schritt (65) zum selektiven Filtern der Verbindungen umfasst, wobei der Schritt zum selektiven Filtern einerseits einen Schritt zum automatischen Erkennen des Zugangsprotokolls, unabhängig von dem Kommunikationsanschluss, der von dem Protokoll verwendet wird, und andererseits, nachdem das Zugangsprotokoll automatisch erkannt worden ist, einen Schritt (110) zur Verifizierung der Konformität von jeder Kommunikation, die über eine gegebene Verbindung zirkuliert, mit dem Protokoll umfasst, um eine dynamische Autorisierung für die Kommunikationen zu liefern (125), die sich aus dem normalen Betrieb des Protokolls ergeben, und einen dynamischen Ausschluss für die Kommunikationen zu liefern (90), die sich aus einem anormalen Betrieb des Protokolls ergeben,
wobei in dem Verfahren:
- die Verifizierung (110) der Konformität Schicht für Schicht durch eine sukzessive Protokollanalyse von jedem Teil des Datenpakets erfolgt, das über die Verbindung zirkuliert, die einem gegebenen Protokoll, vom niedrigsten Protokoll bis zum höchsten Protokoll, entspricht,
- jede autorisierte Hauptverbindung eine oder mehrere sekundäre Verbindungen induzieren kann, wobei mit der Verifizierung der Konformität die Informationen detektiert werden, die für die Öffnung der sekundären Verbindungen erforderlich sind, und die sekundären Verbindungen an die Autorisierung der Hauptverbindung angehängt werden,
wobei in dem Verfahren, solange das Zugangsprotokoll einer Verbindung nicht erkannt wird, die Daten angenommen, aber nicht übertragen werden, und wobei, wenn das Zugangsprotokoll einer Verbindung nicht automatisch erkannt wird, der Schritt der Verifizierung der Konformität von jeder Kommunikation, die über eine gegebene Verbindung zirkuliert, mit dem Protokoll durch eine allgemeine Verifizierung der Kohärenz der Datenpakete ersetzt wird, wobei die Verifizierung der Kohärenz besonders die Sequenzierung und die Weiterleitung der Datenpakete betrifft, wobei eine Vorgehensweise hinsichtlich der Filterung von dem Benutzer spezifiziert wird und zumindest eine Bezeichnung des Protokolls umfasst, die in natürlicher Sprache empfangen wird.

2. Verfahren nach Anspruch 1, **dadurch gekennzeichnet, dass**, wenn die Anzahl der gegebenen angenommenen, aber nicht übertragenen Datenpakete eine bestimmte Schwelle überschreitet oder wenn die Daten angenommen, aber nicht übertragen wurden, seitdem eine Zeit eine bestimmte Schwelle überschritten hat, die Verbindung als nicht analysiert angesehen wird.

3. Verfahren nach einem der Ansprüche 1 und 2, **dadurch gekennzeichnet, dass**, wenn die Daten angenommen, aber nicht übertragen wurden, seitdem eine Zeit eine bestimmte Schwelle überschritten hat, die Verbindung als nicht analysiert angesehen wird.

4. Vorrichtung zur Detektion und Verhinderung eines Eindringens in ein Computernetzwerk, umfassend einen Mittelpunkt und mehrere Zweige, wobei diese Vorrichtung eine Firewall (1) umfasst, wobei ein Mittel zur Verhinderung eines Eindringens durch die Detektion der Verbindungen in der Firewall an dem Mittelpunkt und vor jedem Zweig des Netzwerks direkt integriert ist, um die Gesamtheit der Zweige des Netzwerks zu schützen, wobei das Mittel zur Verhinderung eines Eindringens (18) ein Mittel zum selektiven Filtern der Verbindungen durch ein automatisches Erkennen des Zugangsprotokolls unabhängig von dem Kommunikationsanschluss umfasst, der von dem Protokoll verwendet wird,
wobei in der Vorrichtung:
- das Mittel zum selektiven Filtern (18) mindestens ein autonomes Modul (24, 25, 26) zur Analyse von mindestens einem gegebenen Kommunikationsprotokoll umfasst,
- mindestens eines der autonomen Module umfasst:
i. eine Einheit (28) zum automatischen Erkennen eines gegebenen Kommunikationsprotokolls,
ii. eine Einheit (29) zur Verifizierung der Konformität von Kommunikationen, die über eine gegebene Verbindung zirkulieren, mit dem Protokoll,
iii. ein Mittel zum Liefern einer dynamischen Autorisierung für die Kommunikationen, die sich aus dem normalen Betrieb des Protokolls ergeben und Liefern eines dynamischen Ausschlusses für die Kommunikationen, die sich aus einem anormalen Betrieb des Protokolls ergeben,
iv. ein Mittel zum Übertragen eines Teils eines Datenpakets zu einem autonomen Modul zur Analyse von einem höherrangigen Protokoll,
wobei die Vorrichtung zusätzlich zu dem oder den autonomen Modul(en) zur Analyse eines gegebenen Kommunikationsprotokolls ein autonomes allgemeines Modul umfasst, das sich mit Verbindungen verbindet, für die das Protokoll nicht durch eines der anderen autonomen Module erkannt wurde, wobei das autonome allgemeine Modul ausgestaltet ist, um die Kohärenz der Datenpakete zu verifizieren, wobei die Verifizierung der Kohärenz besonders die Sequenzierung und die Weiterleitung der Datenpakete betrifft, wobei die Vorrichtung **dadurch gekennzeichnet ist, dass** sie eine Schnittstelle zur Auskunft über Kriterien umfasst, welche die Vorgehensweise hinsichtlich der Filterung definieren und von dem Benutzer in natürlicher Sprache spezifiziert werden, wobei die Kriterien zumindest eine Bezeichnung des Protokolls umfassen.

5. Vorrichtung nach Anspruch 4, **dadurch gekennzeichnet, dass** die Schnittstelle die Aktivierung oder Deaktivierung von jedem der autonomen Module ermöglicht.

6. Vorrichtung nach einem der Ansprüche 4 bis 5, **dadurch gekennzeichnet, dass** sie ein Mittel zur statistischen Behandlung von Verbindungsinformationen und ein Mittel zum Speichern der Verbindungsinformationen und der behandelten Informationen umfasst.

## Claims

1. A method for the detection and prevention of intrusions into a computer network comprising a central point and a plurality of branches, this method being implemented by a firewall (1) located at said central point in order to protect all the branches of the network, the method comprising detecting the connections at the central point and before each branch of said network, selective filtering (65) of said connections, where said selective filtering stage includes firstly a stage for automatic recognition of the accessing protocol, independently of the communication port used by the said protocol, and secondly, after said accessing protocol has been recognized automatically, a stage (110) for verifying the conformity of each communication flowing in a given connection to the said protocol, to deliver (125) a dynamic authorization for communications resulting from normal operation of the protocol and to deliver (90) a dynamic rejection for communications resulting from abnormal operation of the protocol,
method wherein :
- said check (110) on conformity is performed layer by layer, by successive protocol analysis of each part of the data packet flowing in the connection corresponding to a given protocol, from the lowest protocol to the highest protocol, and
- since each main connection enabled is able to induce one or more secondary connections, said check on conformity detects the data necessary for opening said secondary connections and attaches said secondary connections to the authorization for connection of said main connection,
wherein, as long as the accessing protocol of a connection is not recognized, the data are accepted but not transmitted, and wherein, when the accessing protocol of a connection is not automatically recognized, said stage of checking on conformity of each communication flowing in a given connection to said protocol is replaced by a stage of generic checking of coherence of data packets, said checking of coherence notably concerning the sequencing and the retransmissions of said data packets, a filtering policy specified by the user and comprising at least a name of said protocol being received in natural language.

2. A method according to claim 1, wherein, if the number of data packets accepted but not transmitted exceeds a certain threshold, or if the data are accepted but not transmitted for a time exceeding a certain threshold, then the connection is considered not to have been analyzed.

3. A method according to any one of claims 1 and 2, wherein if the data are accepted but not transmitted for a time exceeding a certain threshold, then the connection is considered not to have been analyzed.

4. A device for the detection and prevention of intrusions into a computer network comprising a central point and a plurality of branches, the device, comprising a firewall (1), means for preventing intrusions by detection of the connections, directly incorporated into said firewall at the central point and before each branch of said network, in order to protect all the branches of the network, where said means for the prevention of intrusions (18) includes means for selective filtering of said connections by automatic recognition of the accessing protocol, independently of the communication port used by said protocol,
device wherein :
- said selective filtering means (18) includes at least one independent module (24; 25 ; 26) for the analysis of at least one given communication protocol,
- at least one of the independent modules includes:
i. a unit (28) for the automatic recognition of a given communication protocol,
ii. a unit (29) for verifying the conformity of the communication flowing in a given connection to said protocol,
iii. means of delivering a dynamic authorization for communications resulting from normal operation of the protocol, and delivering a dynamic rejection for communications resulting from abnormal operation of the protocol,
iv. means of transmitting part of a data packet to an independent analysis module of a hierarchically higher protocol,
said device comprising, in addition to the independent module or modules for the analysis of a given communication protocol, an independent generic module which attaches itself to the connections for which the protocol has been recognized by none of the other said independent modules, for checking coherence of data packets, said checking of coherence concerning the sequencing and the retransmission of said data packets, said device being **characterized in that** it includes an interface for entry of the criteria that determine the filtering policy, the criteria being specified in natural language by the user, said criteria including at least a name of said protocol.

5. A device according to claim 4, wherein said interface allows the activation or deactivation of each of said independent modules.

6. A device according to any one of claims 4 to 5, wherein the device includes a resource for statistical processing of the connection data, and a resource for storage of said connection data and processed data.
